(19) **Europäisches Patentamt**
**European Patent Office**
**Office européen des brevets**

(11) Publication number: **0 570 080 B1**

(12) **EUROPEAN PATENT SPECIFICATION**

(45) Date of publication of patent specification: **27.12.95**

(51) Int. Cl.⁶: **A01G 31/00**, A01G 27/00, A01G 31/02

(21) Application number: **93201698.3**

(22) Date of filing: **09.06.89**

(60) Publication number of the earlier application in accordance with Art.76 EPC: **0 418 298**

(54) **Method of plant growing using flow control**

(30) Priority: **10.06.88 GB 8813839**

(43) Date of publication of application:
**18.11.93 Bulletin 93/46**

(45) Publication of the grant of the patent:
**27.12.95 Bulletin 95/52**

(84) Designated Contracting States:
**AT BE CH DE FR GB IT LI NL**

(56) References cited:
**EP-A- 0 004 159      EP-A- 0 072 214**
**WO-A-82/03529      WO-A-84/02827**
**GB-A- 1 376 091      GB-A- 2 194 124**
**US-A- 4 463 522**

(73) Proprietor: **University of Strathclyde**
**McCance Building,**
**16 Richmond Street**
**Glasgow G1 1YO,**
**Scotland (GB)**

(72) Inventor: **Graham, Neil Bonnette**
**6 Kilmardinney Grove**
**Bearsden, Glasgow G61 3NY (GB)**
Inventor: **Szmidt, Robert Aleksander Karasinski**
**25 Scaur O'Doon Road**
**Doonfoot,**
**Ayr KA7 4EU (GB)**
Inventor: **Kirkwood, Ralph Christie**
**Glaslyn,**
**Loch Park**
**Doonfoot,**
**Ayr KA7 4EU (GB)**

(74) Representative: **Gallafent, Richard John**
**GALLAFENT & CO.**
**8 Staple Inn**
**London WCIV 7OH (GB)**

Rank Xerox (UK) Business Services
(3.10/3.09/3.3.3)

**Description**

This invention relates to methods of plant growing using control of fluid flow and to an apparatus for use therein.

Where plants, e.g. crops, are grown on a commercial scale, the maintaining of the correct water and nutrient supply needs much attention. It also requires much financial investment in apparatus even where water supply is adequate. In those parts of the world having low rainfall, water conservation is also important and losses by evaporation can be considerable.

It is known to cultivate plants in non-soil media, e.g. US-A-4 463 522 and GB-A-2 194 124, and hydroponically; that is the plants are grown not in soil but in an aqueous solution of the required nutrients. Hydroponic cultivation is successfully used commercially in many parts of the world, including those where rainfall may be low. This method of cultivation does offer control on the amount of water used, but still this amount can be large and the financial investment in equipment large also.

It is also known to grow plants in hydrogel media (e.g. EP-A-0 072 214). Hydrogels are materials which swell by the absorption of water. Thus plants may be grown within a medium of hydrogel granules swollen by aqueous nutrient solution. The hydrogel serves to support the plants and the aqueous nutrient medium, which of course has to be supplemented from time to time, feeds the plants. As with conventional hydroponic systems, large amounts of water are required and the financial investment in equipment can be large.

GB 1376091 describes a method of preparing polyethylene oxide hydrogels which may be used as a plant growing medium. The method involves cross-linking suitable polymers by exposure to ionising radiation in order to produce hydrogels capable of absorbing water to many times their dry weight. This method is expensive requiring a highly capital intensive radiation facility. Furthermore, such highly swelling hydrogels limit aerobic conditions around the roots required for successful plant growth.

Another method of growing plants which does not involve their being grown directly in the ground, employs soil, compost, raw peat, etc. contained in substantially water-impermeable containers, e.g. pots, plastics sacks. Plastics sacks offer a very convenient method to the generally domestic, rather than commercial, market for growing plants on a fairly small scale. The plants are planted in the growth medium through holes pierced in the plastics sack and, provided the holes are not too large, the plastics sack serves to prevent too much water loss from the sack by evaporation. However, watering of the growth medium in the sacks is not convenient and over-watering can result in water-logging of the plants.

According to the present invention, there is provided a method of plant growing, in which method one or more plants are grown in a growth medium comprising particles of partially-crystalline, crosslinked hydrogel, charged with aqueous nutrient solution for the plant or plants, the growth medium being housed in a substantially water-impermeable container and the plants extending out of the container, and, when the water content within the hydrogel particles falls below a predetermined level, introducing further nutrient solution into the container, characterised in that the particles of hydrogel are obtained by reaction of polyethylene glycol with a polyisocyanate and optionally another polyol.

The invention also provides apparatus for use in plant cultivation, which apparatus comprises a water-impermeable container housing a plant-growth medium comprising particles of partially crystalline, crosslinked hydrogel, a supply line for feeding nutrient solution to the growth medium in the container, and a control valve in the supply line, which control valve is closed when the water content of the hydrogel particles is above a predetermined level and is open when the water content is below the predetermined level, characterised in that the particles of hydrogel are obtained by reaction of polyethylene glycol with a polyisocyanate and optionally another polyol.

The present invention offers the opportunity of simple, effective, and readily controllable plant growing at relatively low cost.

The container for the growth medium may be any suitable one. For example the growth medium may be housed in rigid, semi-rigid or flexible envelopes, troughs, e.g. dug in the round, or pots of plastics, metal or natural materials such as clay, or other containers having an external or in-built reservoir which may be controlled. It is preferred that the growth medium should not, in use, have an appreciable exposed surface, especially in locations where water supply is restricted. In this way water loss by evaporation may be kept to a minimum.

A particularly convenient form of container is a plastics sack. The growth medium is housed in the plastics sacks and holes are, e.g., pierced through the sack wall for planting the plants in the growth medium. Suitably the holes should be just large enough for this purpose. By keeping hole size to a minimum, evaporation loss from the growth medium to the atmosphere can be kept to a minimum, which is especially important in high temperature/low rainfall countries.

2

If desired the container for the growth medium may itself be degradable.

The hydrogel used according to the present invention must of course be water-insoluble and must not be too expansible. It is important that, with the fully-swollen hydrogel within the container, capillary channels between the hydrogel particles are retained. In this way, air flow to the plant roots is possible. Otherwise the growing system may become anaerobic and water-logged.

The growth medium may consist entirely of hydrogel particles. However, this may be too expensive. Thus generally the hydrogel will be mixed with at least one other growth medium. Preferably the hydrogel will be mixed with a nutritionally inert medium.

Growing media which can be used with hydrogels include soil, peat-based, chemical-based, (e.g. polyformaldehyde or urea-formaldehyde) or mineral-based (e.g. sand, gravel, perlite, bentonite, rockwool fibres, vermiculite or xeolite) materials. The mixed growth medium should also be hydroporous, and capillarity is again important.

Generally speaking the growth medium will contain 0.5 to 100% by weight of hydrogel.

The ability of the growth medium to take up and release moisture, e.g. to the growing plants, is important. This ability may be expressed in terms of the moisture tension of the growth medium. The optimum moisture tension will vary according to the plant/medium combination. However generally the preferred moisture tension for the growth medium would be approximately -0.01 megapascal (MPa). Depending on the crop/growth medium combination in practice, this value is likely to be in the range of -0.01 MPa to -0.03 MPa.

As mentioned above, the hydrogel used should not be too greatly swelling. Generally the hydrogel has a degree of swelling, from dry, of less than 25 times, and preferably between 5 and 10 times, its dry volume. The hydrogel may be any suitable water-insoluble one with the required degree of swelling. The hydrogels can be of natural or synthetic organic or inorganic material. They are normally made of water-soluble backbone materials which are rendered insoluble by the introduction of covalent crosslinks as described above.

Preferably there is used as hydrogel a crosslinked poly(ethylene glycol or ethylene oxide). Particularly preferred is the use of a crosslinked partially-crystalline polyethylene oxide hydrogel.

The aqueous nutrient solution should contain all the ingredients or all the additional ingredients (not within the growth medium) required by the plants for growth. In addition, it may be advantageous to include for example pesticides in the nutrient solution. An interesting aspect here is that it has been found that nutrient solutions of high salinity may be used according to the present invention and still yield good crops. This is particularly interesting in low rainfall areas where it may be possible to employ sea water, which would normally be fatal to the plants. Nutrients having a salt content of up to 32,000 ppm have been used. Particularly preferred hydrogels here are crosslinked polyethylene oxides.

The swollen hydrogel particles within the container provide a support for the growing plant or plants and, as the nutrient medium is used up, this can readily be detected by a reduction of water content, and thus in swelling of the hydrogel particles. On detection of water content falling below a predetermined level, further nutrient solution is introduced into the container. Thus the invention offers a very easy plant-growing method in which water loss may be kept to a minimum and which does not require expensive and complicated apparatus.

Important to the successful operation of the method according to the present invention is the means for detecting the water content of the hydrogel to activate the introduction of additional nutrient solution. In order that the method according to the present invention can be operated as a low technology/low labour cultivation system, the means need to be simple and reliable in construction. Suitably these means are in form of a control valve in a nutrient solution supply line; the valve being situated within, or in very close proximity to the container. The valve contains moisture-swellable material which, when wet, as when the moisture contained in the container is high, is swollen to close the nutrient solution supply line. However, in dry conditions, the swellable material shrinks and the supply line becomes open. In this way, when the hydrogel in the growth medium becomes dried, the swellable material in the valve (which may incidentally also be of a hydrogel) will also become dry and reduce in size to open the nutrient solution supply line whereby further nutrient solution will be introduced into the container. The introduction of nutrient solution will continue until such time as the moisture content of the swellable material of the valve (and therefore also of the hydrogel particles of the growing material) reaches a predetermined level, where upon the swellable material will swell to close the valve and cease the supply of water until the moisture-content level falls again to below the predetermined amount.

Suitable means for controlling the water content of the growth medium are described for example in EP-B-0 004 159.

3

The method and apparatus of the invention are suitable for use in growing a wide range of edible and non-edible crops e.g. for fresh or processed culinary medicinal use. These include the following:

(1) salad crops e.g. tomatoes, cucumbers, peppers, lettuce, brassica species

(2) cut flowers, e.g. chrysanthemum, carnation, alstromeria, gerbera, freesia

(3) medicinal herbs

(4) culinary herbs

(5) nursery stock, i.e. trees and shrubs, ornamental foliage and flowering "pot plant" species.

For a better understanding of the invention, reference will now be made to the Examples.

**EXAMPLE 1**

The effects of incorporating a hydrogel polymer based on crosslinked polyethylene oxide into sand on the development of selected horticultural plants grown under saline conditions has been demonstrated. In separate experiments, the seeds of tomato (Lycopersicon esculentum, Mill.), lettuce (Lactuca Sativa, L) and Cucumber sativus, L) were germinated in sand/hydrogel polymer with added Hoagland nutrient solution (one strength). At cotyledon + first true leaf stage, the plantlets were transplanted into polyethylene growing bags containing a range of sand/hydrogel polymer combinations (san/polymer, 0/100, 25/75, 50/50, 75/25 & 100/0). Saline solutions containing NaCl, $CaCl_2$ & $MgCl_2$ were prepared as Molar solutions and applied as follows; Control (Hoagland), 2,000, 4,000, 8,000 & 32,000 ppm. Application to the growing bags was made twice per week, alternating with a comparable watering regime. Harvesting was carried out after 14 and 28 days.

The results obtained are shown in Table 1 below.

## TABLE 1

The effects of hydrogel polymer on root depth (cm/Root), Leaf number, Leaf area ($cm^2$/Leaf), Shoot Dry Weight (g/Shoot) and Shoot Succulence (Fresh Weight/Dry Weight)

| HP (%) Item | SC (ppm) | Tomato 2,000 | Tomato 4,000 | Tomato 8,000 | Tomato 32,000 | Lettuce 2,000 | Lettuce 4,000 | Lettuce 8,000 | Lettuce 32,000 | Cucumber 2,000 | Cucumber 4,000 | Cucumber 8,000 | Cucumber 32,000 |
|---|---|---|---|---|---|---|---|---|---|---|---|---|---|
| Root Depth | | | | | | | | | | | | | |
| 0 | | 103.9 | 92.5 | 84.0 | - | 105.5 | 94.0 | 76.6 | - | 100.8 | 110.0 | 81.0 | 19.7 |
| 25 | | 91.7 | 90.0 | 79.5 | 27.2 | 119.4 | 128.5 | 85.8 | - | 111.7 | 121.5 | 98.4 | 43.3 |
| 50 | | 122.2 | 115.8 | 104.7 | 45.6 | 123.4 | 116.7 | 80.8 | 59.0 | 113.9 | 125.1 | 75.4 | 38.9 |
| 75 | | 104.1 | 119.4 | 112.1 | 57.4 | 125.5 | 123.6 | 88.0 | 57.7 | 120.9 | 104.3 | 83.2 | 54.2 |
| 100 | | 115.8 | 85.4 | 82.9 | 28.5 | 141.8 | 131.3 | 124.2 | 66.5 | 101.3 | 103.9 | 79.2 | 42.2 |
| Leaf Number | | | | | | | | | | | | | |
| 0 | | 113.6 | 106.8 | 100.0 | - | 82.8 | 58.2 | 38.8 | - | 88.9 | 90.5 | 66.7 | 54.0 |
| 25 | | 97.7 | 100.0 | 84.6 | 53.9 | 87.3 | 69.0 | 47.2 | - | 90.4 | 83.6 | 76.7 | 60.3 |
| 50 | | 102.1 | 100.0 | 83.6 | 64.3 | 91.2 | 89.8 | 68.7 | 38.8 | 120.6 | 114.3 | 106.4 | 74.6 |
| 75 | | 105.0 | 102.1 | 96.7 | 62.1 | 120.5 | 100.0 | 70.5 | 37.5 | 123.4 | 114.1 | 101.6 | 75.0 |
| 100 | | 108.3 | 97.5 | 95.5 | 60.8 | 105.1 | 88.9 | 83.8 | 46.2 | 121.9 | 112.5 | 95.3 | 75.0 |
| Leaf Area | | | | | | | | | | | | | |
| 0 | | 111.6 | 96.9 | 94.7 | - | 36.3 | 17.4 | 7.3 | - | 120.0 | 82.3 | 72.9 | 22.3 |
| 25 | | 79.1 | 64.6 | 62.1 | 12.9 | 63.7 | 29.2 | 21.8 | - | 138.6 | 130.6 | 102.2 | 56.8 |
| 50 | | 123.1 | 92.3 | 63.1 | 15.4 | 71.5 | 91.8 | 58.7 | 16.3 | 94.6 | 85.6 | 103.6 | 34.2 |
| 75 | | 92.3 | 91.4 | 96.4 | 25.0 | 91.3 | 67.2 | 31.0 | 15.5 | 128.6 | 90.5 | 87.6 | 32.4 |
| 100 | | 84.3 | 80.8 | 70.0 | 12.8 | 111.6 | 98.1 | 38.5 | 19.2 | 100.0 | 109.5 | 87.6 | 29.5 |
| Shoot Dry Weight | | | | | | | | | | | | | |
| 0 | | 115.0 | 70.0 | 65.0 | - | 31.2 | 18.8 | 12.5 | - | 64.7 | 60.8 | 51.0 | 21.6 |
| 25 | | 96.0 | 80.0 | 60.0 | 8.0 | 86.7 | 69.2 | 36.7 | - | 109.5 | 81.0 | 59.1 | 28.6 |
| 50 | | 118.2 | 72.7 | 45.5 | 13.7 | 81.3 | 78.1 | 37.3 | 6.3 | 109.3 | 102.8 | 83.3 | 29.6 |
| 75 | | 84.0 | 72.0 | 68.0 | 12.0 | 71.4 | 48.6 | 14.3 | 5.7 | 114.4 | 118.6 | 66.1 | 28.0 |
| 100 | | 96.4 | 71.4 | 60.7 | 10.7 | 145.5 | 100.0 | 45.5 | 9.1 | 108.0 | 102.9 | 93.5 | 22.5 |
| Shoot Succulence | | | | | | | | | | | | | |
| 0 | | 93.8 | 108.9 | 115.2 | - | 92.6 | 77.3 | 104.2 | - | 88.6 | 115.5 | 100.0 | 103.3 |
| 25 | | 118.8 | 100.0 | 96.4 | 89.3 | 60.3 | 43.6 | 71.6 | - | 88.0 | 90.0 | 84.0 | 71.3 |
| 50 | | 96.0 | 122.2 | 119.1 | 67.5 | 54.3 | 92.3 | 78.3 | 106.8 | 121.7 | 108.5 | 113.3 | 94.3 |
| 75 | | 104.4 | 118.5 | 94.1 | 108.9 | 96.1 | 95.7 | 121.7 | 108.7 | 133.3 | 112.2 | 119.3 | 124.6 |
| 100 | | 107.4 | 103.3 | 116.5 | 47.9 | 98.6 | 96.7 | 76.8 | 94.8 | 104.1 | 107.3 | 96.8 | 110.6 |

H.P = Hydrogel Polymer. Sp = Species. SC = Salinity Concentrations (ppm) Molar equivalent $6.0 \times 10^{-1}$. $1.2 \times 10^{-1}$. $2.4 \times 10^{-1}$ & $9.6 \times 10^{-1}$ respectively.

Polymer incorporation encouraged growth of all species under all saline conditions, the order of effectiveness of the polymer contents being as follows; 75% > 50% > 25% > 100% > 0%. At high salinity (32,000 ppm) plants of the test species were reduced in growth but appeared to tolerate at all levels of polymer incorporation; in pure sand the level of tolerance in tomato and cucumber was < 8,000 ppm and in lettuce < 4,000 ppm. Generally, root depth, dry weight, leaf area and number, succulence, chloroplast pigments (chlorophyll a, chlorophyll b & carotenoids), photosynthetic activity, total amino acids, proline, hydroxyproline and protein contents were increased with polymer incorporation compared with pure sand. The hydrogel polymer appears to be highly effective for use as a soil conditioner in horticulture, to improve crop tolerance and growth in a sand or light gravel substrate under saline conditions.

## EXAMPLE 2

In this example poly(ethylene oxide) hydrogel was used to grow a crop of tomatoes (cultivar Counter) to maturity under a range of salinity regimes. In this case hydrogel alone and in combination with varying proportions of sand, was contained in a woven polyester bags having a nominal rooting volume of c. 8.3 litres per plant. Young plants, propagated solely in hydrogel contained in cellular trays, were irrigated with a complete nutrient solution of equal parts A & B (See Table 2 below) diluted to an applied conductivity of CF 15. These plants were placed in the final growth medium at the 2-3 true leaf stage. Hydrogel:Sand ratios of 100:0, 75:25, 50:50, 25:75 and 0:100 were utilised. Irrigation solution available to plants was of equal parts A & C (Table 2) diluted to a conductivity of CF 20 and supplemented with either 0, 2,000 or 8,000 parts per million (ppm) NaCl. Plants were maintained in an east-west oriented glasshouse with a heating thermostat setpoint of 18°C, ventilation set point 24°C.

The fruit yield is give in Table 3 below. While yield is significantly reduced by increasing salinity the presence of hydrogel can significantly moderate this, giving a consequent increase in yield. Yield increases were significant at both 100% and 75% hydrogel and plant survival at high salinity was generally improved. Benefits of hydrogel incorporation below this level were smaller, but nonetheless apparent.

This feature of salinity moderation was supported by other observations of leaf number, plant height and flower branch ("truss") number, in which the effect of salinity is reduced to a statistically significant extent in all cases where gel was incorporated to a level of 50% or more at the root zone. In a "field scale" this would equate to below 1% of soil volume depending on local soil conditions.

### TABLE 2

| NUTRIENT COMPONENTS FOR LOW AND HIGH N SOLUTIONS | | | |
|---|---|---|---|
| | | Mass (g/litre) | Total Element Concentration (ppm) When Diluted 1/1000 | |
| A. | Calcium nitrate | 40 | Ca68 | $NO_3$-N47 |
| B. | Potassium sulphate | 28 | K126 | |
| | Potassium nitrate | 21 | K 80 | $NO_3$-N28 |
| | Mono-amm.phosphate | 7.5 | $NH_4$-N9 | P20 |
| | Magnesium sulphate | 19 | Mg19 | |
| | Iron EDTA | 1/78 | Fe 2.4 | |
| | Manganese sulphate | 0.31 | Mn 0.76 | |
| | Borax | 0.21 | B 0.27 | |
| | Ammonium Molybdate | 0.012 | Mo 0.05 | |
| C. | Potassium nitrate | 59 | K224 | $NO_3$-N77 |
| | Mono-amm.phosphate | 14 | $NH_4$-N17 | P38 |
| | Magnesium sulphate | 19 | Mg19 | |
| | Iron EDTA | 1.78 | Fe 2.4 | |
| | Maganese sulphate | 0.31 | Mn 0.76 | |
| | Borax | 0.21 | B 0.27 | |
| | Ammonium Molybdate | 0.012 | Mo 0.05 | |

TABLE 3

| Mean numbers of tomato fruit produced 23 weeks after sowing. | | | | | |
|---|---|---|---|---|---|
| ppm NaCl | % Hydrogel | | | | |
| | 100 | 75 | 50 | 25 | 0 |
| 0 | 21.0±2.0 | 21.3±3.9 | 11.0±0.5 | 13.3±1.6 | 15.7±1.2 |
| 2000 | 19.3±1.7 | 16.2±1.3 | 12.2±0.8 | 4.2±1.0 | 0 ± 0 |
| 8000 | 6.5±1.7 | 0 ± 0 | 2.0±1.2 | 0 ± 0 | 0 ± 0 |

## Claims

1. A method of plant growing in which one or more plants are grown in a growth medium comprising particles of partially-crystalline, cross-linked hydrogel, charged with aqueous nutrient solution for the plant or plants, the growth medium being housed in a substantially water-impermeable container with the plants extending out of the container, and, when the water content within the hydrogel particles falls below a predetermined level, introducing further nutrient solution into the container characterised in that the particles of hydrogel are obtained by reaction of polyethylene glycol with a polyisocyanate and optionally another polyol.

2. A method of growing plants, in which method one or more plants are grown in a growth medium comprising particles of partially-crystalline, cross-linked hydrogel, charged with aqueous nutrient solution for the plant or plants, characterised in that the particles of hydrogel are obtained by reaction of polyethylene glycol with a polyisocyanate and optionally another polyol and the aqueous nutrient solution comprises sea water.

3. A method according to Claim 1 or 2, wherein the growth medium comprises hydrogel particles and nutritionally-inert particles.

4. A method according to Claim 1 or 2, wherein the growth medium comprises 0.5 to 100% weight cross-linked polyethylene glycol hydrogel particles, and up to 99.5% by weight nutritionally-inert particles, and has a moisture tension of -0.01 MPa to -0.03 MPa.

5. Apparatus for use in the method of any of any preceding claims, which apparatus comprises a water-impermeable container housing a plant-growth medium comprising particles of partially-crystalline, cross-linked hydrogel, a supply line for feeding nutrient solution in the growth medium in the container, and a valve in the supply line, which valve is closed when the water content of the hydrogel particles is above a predetermined level, and is open when the water content is below the predetermined level, characterised in that the particles of hydrogel are obtained by reaction of polyethylene glycol with a polyisocyanate and optionally another polyol.

## Patentansprüche

1. Verfahren zum Züchten von Pflanzen, bei dem eine oder mehrere Pflanzen in einem Wachstumsmedium gezüchtet werden, das Teilchen eines partiell kristallinen, vernetzten Hydrogels, das mit einer wäßrigen Nährlösung für die Pflanze(n) beschickt ist, enthält, wobei das Wachstumsmedium sich in einem im wesentlichen wasserundurchlässigen Behälter befindet, wobei die Pflanzen sich aus dem Behälter nach außen erstrecken, wobei dann, wenn der Wassergehalt innerhalb der Hydrogelteilchen unter ein vorbestimmtes Niveau fällt, zusätzliche Nährlösung in den Behälter eingeführt wird, dadurch gekennzeichnet, daß die Teilchen des Hydrogels durch Umsetzung von Polyethylenglykol mit einem Polyisocyanat und ggf. einem weiteren Polyol erhalten worden sind.

2. Verfahren zum Züchten von Pflanzen, bei dem eine oder mehrere Pflanzen in einem Wachstumsmedium gezüchtet werden, das Teilchen eines partiell kristallinen, vernetzten Hydrogels, das mit einer wäßrigen Nährlösung für die Pflanze(n) beschickt ist, enthält, dadurch gekennzeichnet, daß die Teilchen des Hydrogels durch Umsetzung von Polyethylenglykol mit einem Polyisocyanat und ggf.

einem weiteren Polyol erhalten worden sind und daß die wäßrige Nährlösung Meerwasser enthält.

3. Verfahren nach Anspruch 1 oder 2, wobei das Wachstumsmedium Hydrogelteilchen und ernährungstechnisch inerte Teilchen enthält.

4. Verfahren nach Anspruch 1 oder 2, wobei das Wachstumsmedium 0,5 bis 100 Gew.-% vernetzte Polyethylenglykol-Hydrogelteilchen und bis zu 99,5 Gew.-% ernährungstechnisch inerte Teilchen enthält und eine Feuchtigkeitsspannung von -0,01 MPa bis -0,03 MPa aufweist.

5. Vorrichtung zur Verwendung im Verfahren nach einem der vorstehenden Ansprüche, umfassend einen wasserundurchlässigen Behälter zur Aufnahme eines Pflanzenwachstumsmediums, das Teilchen eines partiell kristallinen, vernetzten Hydrogels enthält, eine Versorgungsleitung zur Zufuhr von Nährstofflösung in das Wachstumsmedium im Behälter und ein Ventil in der Versorgungsleitung, das geschlossen ist, wenn der Wassergehalt der Hydrogelteilchen über einem vorbestimmten Niveau liegt, und das offen ist, wenn der Wassergehalt unter einem vorbestimmten Niveau liegt, dadurch gekennzeichnet, daß die Teilchen des Hydrogels durch Umsetzung von Polyethylenglykol mit einem Polyisocyanat und ggf. einem weiteren Polyol erhalten worden sind.

**Revendications**

1. Méthode pour la culture de plantes dans laquelle on cultive une ou plusieurs plantes dans un milieu de culture comprenant des particules d'hydrogel réticulé partiellement cristallin, chargées de solution aqueuse nutritive pour la plante ou les plantes, le milieu de culture étant contenu dans un conteneur essentiellement imperméable à l'eau avec des plantes s'étendant endehors du conteneur et lorsque la teneur en eau dans les particules d'hydrogel descend au-dessous d'un niveau prédéterminé, on introduit de la solution nutritive supplémentaire dans le conteneur, caractérisée en ce que les particules d'hydrogel sont obtenues par réaction du polyéthylène-glycol avec un polyisocyanate et, facultativement, un autre polyol.

2. Méthode de culture de plantes dans laquelle une ou plusieurs plantes sont cultivées dans un milieu de croissance comprenant des particules d'hydrogel réticulé partiellement cristallin, chargées de solution aqueuse nutritive pour la plante ou les plantes, caractérisée en ce qu'on obtient les particules d'hydrogel par réaction du polyéthylène-glycol avec un polyisocyanate et facultativement un autre polyol et la solution aqueuse nutritive comprend de l'eau de mer.

3. Méthode selon la revendication 1 ou 2, où le milieu de croissance comprend des particules d'hydrogel et des particules inertes sur le plan nutritionnel.

4. Méthode selon la revendication 1 ou 2, où le milieu de croissance comprend de 0,5 à 100% en poids de particules d'hydrogel de polyéthylène-glycol réticulé et jusqu'à 99,5% en poids de particules inertes sur le plan nutritionnel et a une tension de vapeur d'eau de -0,01 MPa à -0,à3 MPa.

5. Appareil pour l'utilisation dans la méthode de l'une quelconque des revendications précédentes, lequel appareil comprend un conteneur imperméable à l'eau renfermant un milieu de culture de plantes comprenant des particules d'hydrogel réticulé partiellement cristallin, une conduite d'alimentation pour alimenter en solution nutritive le milieu de culture dans le conteneur, et une vanne montée dans la conduite d'alimentation laquelle vanne est fermée lorsque la teneur en eau dans les particules d'hydrogel est supérieure à un niveau prédéterminé et elle est ouverte lorsque la teneur en eau est inférieure à un niveau prédéterminé, caractérisée en ce que les particules d'hydrogel sont obtenues par réaction du polyéthylène-glycol avec un polyisocyanate et facultativement un autre polyol.